(19) **Europäisches Patentamt**
**European Patent Office**
**Office européen des brevets**

(11) **EP 3 845 856 B1**

(12) **EUROPEAN PATENT SPECIFICATION**

(45) Date of publication and mention
of the grant of the patent:
**13.03.2024  Bulletin 2024/11**

(21) Application number: **19855050.1**

(22) Date of filing: **29.08.2019**

(51) International Patent Classification (IPC):
*G01B 11/25* $^{(2006.01)}$   *B21C 47/06* $^{(2006.01)}$
*G01N 21/88* $^{(2006.01)}$   *G01N 21/952* $^{(2006.01)}$
*G01B 11/08* $^{(2006.01)}$   *B21C 51/00* $^{(2006.01)}$

(52) Cooperative Patent Classification (CPC):
**B21C 47/063; G01B 11/2518; G01B 11/2545;**
**G01N 21/8851; G01N 21/952;** B21C 51/00;
G01B 11/08

(86) International application number:
**PCT/KR2019/011073**

(87) International publication number:
**WO 2020/046010 (05.03.2020 Gazette 2020/10)**

(54) **APPARATUS FOR MEASURING TELESCOPING OF COIL**

VORRICHTUNG ZUR MESSUNG DER TELESKOPIERUNG EINER SPULE

APPAREIL POUR MESURER LE TÉLESCOPAGE D'UNE BOBINE

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority:  **29.08.2018   KR 20180101995**

(43) Date of publication of application:
**07.07.2021   Bulletin 2021/27**

(73) Proprietor: **POSCO Co., Ltd**
**Pohang-si, Gyeongsangbuk-do 37859 (KR)**

(72) Inventors:
 • **CHOI, Yong-Joon**
  **Pohang-Si, Gyeongsangbuk-do 37877 (KR)**

 • **KONG, Nam-Woong**
  **Pohang-Si, Gyeongsangbuk-do 37877 (KR)**

(74) Representative: **Meissner Bolte Partnerschaft**
**mbB**
**Patentanwälte Rechtsanwälte**
**Postfach 86 06 24**
**81633 München (DE)**

(56) References cited:
JP-A- H05 312 528    JP-A- 2003 097 923
JP-A- 2014 069 216    KR-A- 970 047 895
KR-A- 19980 026 184    KR-A- 20040 020 358
KR-A- 20040 056 822    KR-A- 20150 137 184
KR-B1- 101 581 554

**EP 3 845 856 B1**

**Description**

[Technical Field]

The present disclosure relates to an apparatus for measuring telescoping of a coil.

[Background Art]

In general, when describing a coiling process in a hot-rolling line, a tip portion of a strip may be bent in a downward direction while passing through a pair of pinch rolls. The tip portion of the bent strip may be wrapped around a mandrel between the mandrel and a wrapper roll surrounding the mandrel. After a certain period of time has elapsed, the mandrel may expand in a circumferential direction, and tension may be applied between the pinch roll and the mandrel, to perform the coiling process.

In such a coiler, if a material is shaken in a width direction while being wound, the material may not be wound in the same position during the coiling process, but the material may be wound in an arbitrary position in the width direction. In this manner, a step difference such as due to a telescope shape occurs in a coil wound in such an arbitrary position, which may be defined as telescoping. Such telescoping may have a major problem of lowering an error rate in a product due to defects such as stamping, folding, and the like, in processing the coil when the coiling process occurs.

For the prior art, it can be easily understood with reference to KR 10 1 715 497 B1.

KR 10 2004 0 020 358 A provides a system and a method for measuring telescope of strip coil to accurately measure coiled shape and telescope amount of coil at high speed without mechanical driving by using infrared striped laser and area scan CCD camera. The method for measuring telescope of strip coil comprises first step (110) of discriminating whether laser stripes are existed in camera images or not using a strip coil telescope measuring system comprising laser, area scan CCD camera and calculator; second step (120) of judging that the strip coil is reached to a measuring point if the first step is satisfied; third step (130) of extracting a central line of the laser stripes; fourth step (140) of storing horizontal length and profile of the laser stripes by calculating the horizontal length of the laser stripes; fifth step (150) of judging whether the center of the strip coil is reached to the measuring point or not; and sixth step (160) of regarding the horizontal length when the center of the strip coil is reached to the measuring point as diameter of the strip coil, and determining a difference between the maximum profile value and the minimum profile value when the center of the strip coil is reached to the measuring point as a telescope amount of the strip coil if the fifth step is satisfied, wherein the method comprises seventh step (170) of judging whether the stripes are existed or not just before the first step if the first step is not satisfied; eighth step (180) of performing the first step by judging that the strip coil is not reached if conditions of the seventh step are not satisfied; and ninth step (190) of judging that the strip coil is completely deviated from the measuring point, and outputting telescope profile of the strip coil in a three-dimensional shape using stored profile data if conditions of the seventh step are satisfied.

JP 2014 - 69 216 A describes an edge defect detection apparatus 10 which includes a side surface information acquisition unit 1 that uses a laser beam L irradiated in a slit-like manner and scans the side surface of a steel belt coil C, and thereby acquires three-dimensional depth information of the side surface of the steel belt coil C to send it to a defect detection unit 4. The defect detection unit 4 measures irregularity data generated by removing the influence of disturbance occurring during measurement by a light-section method concerning the acquired three-dimensional depth information, performs labeling of a feature area about the irregularity data, and also traces an edge line every one piece of a steel belt of the steel belt coil C, and thereby detects a variety of defects caused in the side surface of the steel belt coil C.

JP 2003 - 97 923 A describes a method for measuring a coil winding form with a high speed, and also the apparatus used for the same. A plurality of linear scanning type distance meters are arranged in one line so as to cover the end surface of a coil from the inner diameter side to the outer diameter side, individually, and also the distance distribution to the desired end surface of the coil is simultaneously measured with the linear scanning type distance meters, so that the coil form is measured.

KR 10 1 581 554 B1 discloses an apparatus to measure a width of a steel sheet, and a method thereof. The apparatus to measure the width of a steel sheet comprises: a line laser generator to irradiate a plurality of lines to a steel sheet at intervals of a setting distance; a camera part to photograph a plurality of lines irradiated to the steel sheet; an encoder to detect a moving distance of the steel sheet; a storing part to separate and store information on a plurality of lines by each line; and a controlling part to extract information on the plurality of lines with respect to the plurality of lines from the photographed image photographed by operating a camera part whenever the moving distance of the steel sheet inputted from an encoder is moved as much as a setting distance after the line laser generator is operated and storing the information in the storing part, and to calculate a width of the sheet by performing shape compensation and vibration compensation based on information on the plurality of lines stored in the storing part.

[Disclosure]

[Technical Problem]

According to an embodiment of the present disclosure, there is provided an apparatus for measuring telescoping of a coil, which is a shape defect of the coil, after the coil is wounded by a coiler of a hot-rolling line and before the coil is transferred.

[Technical Solution]

According to an aspect of the present disclosure, an apparatus configured to measure telescoping of a coil, according to an embodiment of the present disclosure, includes a laser generation unit configured to generate at least one laser line output to a lateral surface of the coil and passing through a center of the coil; a camera unit configured to capture an image of the lateral surface of the coil, including the at least one laser line; and a measurement unit configured to measure a degree of telescoping of the coil along a length corresponding to the lateral surface of the coil, among lengths of the at least one laser line, from the image captured by the camera unit; wherein the laser generation unit comprises a first line laser generator, a second line laser generator, and a third line laser generator, configured to respectively output laser lines to the lateral surface of the coil at equal intervals; wherein the measurement unit is configured to recognize both end points of the laser line overlapping an inner circle and an outer circle of the coil, among the laser lines, from the image captured by the camera unit, and to recognize a case in which a length between the both end points of the laser lines is within a preset range, as the coil; wherein the measurement unit is configured to calculate radii of the inner circle and the outer circle of the coil, wherein the difference between these values indicates the exact length of the telescope in the actual coil, that is, the thickness of the coil, and to correct the measured value of the laser line obtained by the actual camera to the calculated length.

[Advantageous Effects]

According to an aspect of the present disclosure, an apparatus less affected by an environment and having an effect of stabilizing coiling quality may be provided.

[Description of Drawings]

FIG. 1 is a configuration diagram schematically illustrating an apparatus for measuring telescoping of a coil, according to an embodiment of the present disclosure.
FIG. 2 is a more detailed configuration diagram illustrating an apparatus for measuring telescoping of a coil, according to an embodiment of the present disclosure.
FIG. 3 is a view illustrating telescoping of a coil measured by an apparatus for measuring telescoping of a coil, according to an embodiment of the present disclosure.
FIG. 4 is a graph illustrating telescoping of a coil measured by an apparatus for measuring telescoping of a coil, according to an embodiment of the present disclosure.

[Best Mode for Invention]

Hereinafter, embodiments will be described in detail with reference to the accompanying drawings so that those of ordinary skill in the art may easily implement the present disclosure.

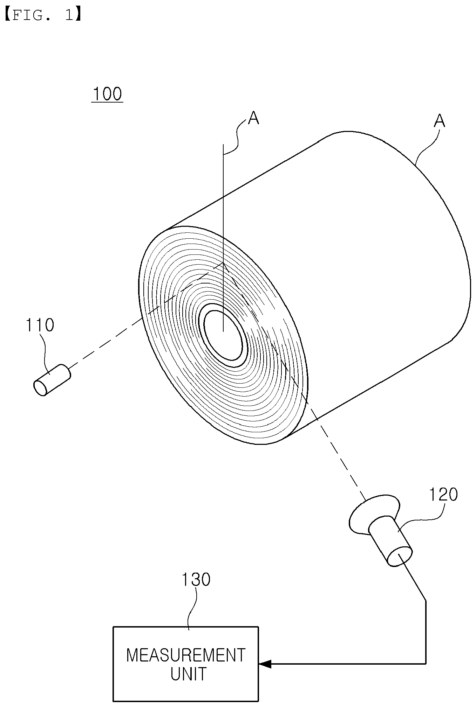

FIG. 1 is a configuration diagram schematically illustrating an apparatus for measuring telescoping of a coil, according to an embodiment of the present disclosure.
Referring to FIG. 1, an apparatus 100 for measuring telescoping of a coil, according to an embodiment of the present disclosure, may include a laser generation unit 110, a camera unit 120, and a measurement unit 130.
The laser generation unit 110 may output a laser at an arbitrary angle with respect to a coil A, wound on a transfer unit (not illustrated) transferred to a certain position, to generate a laser line B having a straight line on a lateral surface of the coil A.
The camera unit 120 may be disposed at an arbitrary angle with respect to the laser line B, to obtain an image of the laser line.
The laser generation unit 110 and the camera unit 120 may have an arbitrary angle, and as the angle increases, resolution of measuring telescoping of a coil may increase.

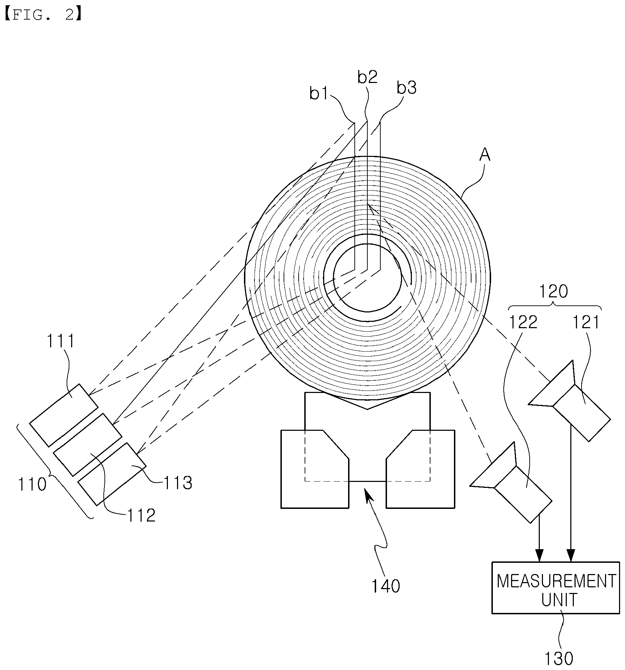

FIG. 2 is a more detailed configuration diagram illustrating an apparatus for measuring telescoping of a coil, according to an embodiment of the present disclosure.

Referring to FIGS. 1 and 2, a laser generation unit 110 of an apparatus 100 for measuring telescoping of a coil, according to an embodiment of the present disclosure, may include a plurality of line laser generators 111, 112, and 113, respectively generating a laser line. For example, the plurality of line laser generators 111, 112, and 113 may be a first line laser generator 111, a second line laser generator 112, and a third line laser generator 113.

Three (3) laser lines b1, b2, and b3 may be output at equal intervals.

Since one (1) laser line may be interfered by a distorted signal to decrease a degree of recognition depending on an environment, the three (3) laser lines may be restrictively used to increase the degree of recognition.

The measurement unit 130 may secure end points of the three (3) laser lines to obtain a radius of a circle. When a value of the radius falls within a preset value, an object to be measured may be recognized as a coil.

The camera unit 120 may include a plurality of cameras 121 and 122. For example, the plurality of cameras 121 and 122 may be a first camera 121 and a second camera 122, respectively, and an absolute position of a coil shape may be known according to a stereo vision principle.

An apparatus 100 for measuring telescoping of a coil, according to an embodiment of the present disclosure, may further include a transfer unit 140. Since a position of the transfer unit 140 is constant for each coil, the laser generation unit 110 may be formed at a fixed position. Since a center of the coil moves only in upward and downward directions according to weight of the coil, the laser line B may always pass through the center of the coil.

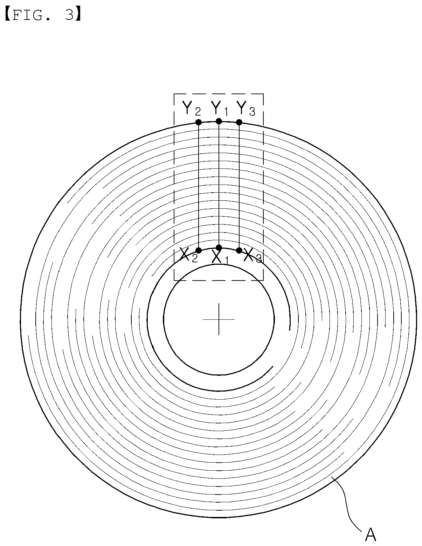

FIG. 3 is a view illustrating telescoping of a coil measured by an apparatus for measuring telescoping of a coil, according to an embodiment of the present disclosure.

Referring to FIG. 3 along with FIGS. 1 and 2, the measurement unit 130 may apply the following principle with respect to a camera image of a laser line on a surface of the measured coil.

The number of laser lines is three (3) in total. Three (3) lines of a cross-sectional view of the coil may be obtained from the three (3) laser lines, and end points of each of the lines may be obtained.

The measurement unit 130 may obtain the end points of the three (3) laser lines, to obtain a radius of a circle, as illustrated in Equation 1 below. When a value of the radius falls within a certain value, it may be recognized as a coil.

[Equation 1]

End points of inner circle of coil of three (3) laser lines:

$(X_1, X_2, X_3)$

End points of outer circle of coil of three (3) laser lines:

$(Y_1, Y_2, Y_3)$

Effective diameter range: $900 \leq R(Y_1, Y_2, Y_3) \leq 2500$

$700 \leq r(X_1, X_2, X_3) \leq 800$

Where r is a radius of an inner circle of a coil (mm), and R is a radius of an outer circle of the coil (mm).

In addition, points of each of the obtained lines by the measurement unit 130 may be calculated, as illustrated in Equation 2 below, by a formula of the inner circle and the outer circle of the coil.

From the calculated equation of each of the circles, the center and radius of the coil, that is, radii of the inner circle and the outer circle of the coil, may be found, and the difference between these values indicates the exact length of the telescope in the actual coil, that is, the thickness of the coil. By correcting the measured value of the laser line obtained by the actual camera to the calculated length, it may be possible to obtain even more precise measurement value.

[Equation 2]

Inner circle of coil: $(X_1, X_2, X_3) \Rightarrow X^2+Y^2+aX+bY+c=0$

Center of inner circle of coil: $\left(\dfrac{-a}{2}, \dfrac{-b}{2}\right)$

Radius of inner circle of coil: $R = \dfrac{\sqrt{a^2+b^2-4c}}{2}$

Outer circle of coil: $(Y_1, Y_2, Y_3) \Rightarrow X^2+Y^2+dX+eY+f=0$

Center of outer circle of coil: $\left(\dfrac{-d}{2}, \dfrac{-e}{2}\right)$

Radius of outer circle of coil: $r = \dfrac{\sqrt{d^2+e^2-4f}}{2}$

Measured length of telescoping: $R(Y_1, Y_2, Y_3) - r(X_1, X_2, X_3)$

Where, a, b, c, d, e, and f are constants, R is a radius of an inner circle of a coil (mm), and r is a radius of an outer circle of the coil (mm).

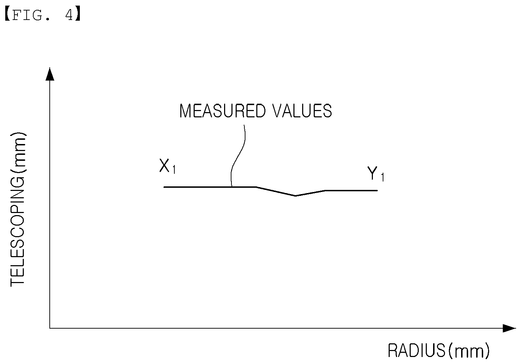

FIG. 4 is a graph illustrating telescoping of a coil measured by an apparatus for measuring telescoping of a coil, according to an embodiment of the present disclosure.

Referring to FIG. 4, a measurement unit 130 may obtain a measured value of telescoping according to Equation 2 described above.

The measurement unit 130 may average measured values of three (3) laser lines, or select a measured value of a laser line having a high light intensity, among the three (3) laser lines, to avoid measurement failure or distorted information and measure a more stable value.

As described above, according to the present disclosure, in measuring telescoping of a hot-rolled coil, an apparatus less affected by an environment may be configured by making a fixed distance from the hot-rolled coil in a non-contact fixed type. In addition, since a degree of telescoping of the hot-rolled coil may be measured only by a laser and a camera, work standards or prior problems of an operation according to a quantitative size may be grasped to obtain an effect of stabilizing coiling quality.

While example embodiments have been illustrated and described above, it will be apparent to those skilled in the art that modifications and variations could be made without departing from the scope of the present disclosure as defined by the appended claims.

**Claims**

1. An apparatus (100) configured to measure telescoping of a coil, comprising:

a laser generation unit (110) configured to generate at least one laser line output to a lateral surface of the coil and passing through a center of the coil;
a camera unit (120) configured to capture an image of the lateral surface of the coil, including the at least one laser line; and

a measurement unit (130) configured to measure a degree of telescoping of the coil along a length corresponding to the lateral surface of the coil, among lengths of the at least one laser line, from the image captured by the camera unit (120);

wherein the laser generation unit (110) comprises a first line laser generator (111), a second line laser generator (112), and a third line laser generator (113), configured to respectively output laser lines (b1, b2, b3) to the lateral surface of the coil at equal intervals;

wherein the measurement unit (130) is configured to recognize both end points ($X_1$, $X_2$, $X_3$, $Y_1$, $Y_2$, $Y_3$) of the laser line ($b_1$, $b_2$, $b_3$) overlapping an inner circle and an outer circle of the coil, among the laser lines ($b_1$, $b_2$, $b_3$), from the image captured by the camera unit (120), and to recognize a case in which a length between the both end points ($X_1$, $X_2$, $X_3$, $Y_1$, $Y_2$, $Y_3$) of the laser line ($b_1$, $b_2$, $b_3$) is within a preset range, as the coil;

wherein the measurement unit (130) is configured to calculate radii of the inner circle and the outer circle of the coil, wherein the difference between these values indicates the exact length of the telescope in the actual coil, that is, the thickness of the coil, and to correct the measured value of the laser line ($b_1$, $b_2$, $b_3$) obtained by the actual camera to the calculated length.

2. The apparatus (100) of claim 1, wherein the camera unit (120) comprises a plurality of cameras (121, 122).

3. The apparatus (100) of claim 1, wherein the measurement unit (130) is configured to measure the degree of telescoping of the coil according to an average value of the lengths between the both end points ($X_1$, $X_2$, $X_3$, $Y_1$, $Y_2$, $Y_3$) of the laser line ($b_1$, $b_2$, $b_3$), among the at least one laser line ($b_1$, $b_2$, $b_3$), or a length between both end points ($X_1$, $X_2$, $X_3$, $Y_1$, $Y_2$, $Y_3$) of a laser line ($b_1$, $b_2$, $b_3$) having high light intensity in an image of the laser line ($b_1$, $b_2$, $b_3$).

4. The apparatus (100) of claim 1, further comprising a transfer unit (140) transferring the coil to a certain position.

**Patentansprüche**

1. Vorrichtung (100), die dazu konfiguriert ist, die Teleskopierung einer Spule zu messen, umfassend:

eine Lasererzeugungseinheit (110), die dazu konfiguriert ist, mindestens eine Laserlinie, die auf eine seitliche Oberfläche der Spule ausgegeben wird und durch eine Mitte der Spule verläuft, zu erzeugen;

eine Kameraeinheit (120), die dazu konfiguriert ist, ein Bild der seitlichen Oberfläche der Spule aufzunehmen, beinhaltend die mindestens eine Laserlinie, und

eine Messeinheit (130), die dazu konfiguriert ist, einen Grad von Teleskopierung der Spule entlang einer Länge, die der seitlichen Oberfläche der Spule entspricht, aus Längen von der mindestens einen Laserlinie, aus dem Bild, das von der Kameraeinheit (120) aufgenommen wurde, zu messen,

wobei die Lasererzeugungseinheit (110) einen ersten Laserlinienerzeuger (111), einen zweiten Laserlinienerzeuger (112) und einen dritten Laserlinienerzeuger (113) umfasst, die dazu konfiguriert sind, jeweils Laserlinien (b1, b2, b3) auf die seitliche Oberfläche der Spule in regelmäßigen Abständen auszugeben;

wobei die Messeinheit (130) dazu konfiguriert ist, beide Endpunkte ($X_1$, $X_2$, $X_3$, $Y_1$, $Y_2$, $Y_3$) der Laserlinie ($b_1$, $b_2$, $b_3$), überlappend einen inneren Kreis und einen äußeren Kreis der Spule, aus den Laserlinien ($b_1$, $b_2$, $b_3$) aus dem Bild, das von der Kameraeinheit (120) aufgenommen wurde, zu erkennen und einen Fall, in dem eine Länge zwischen den beiden Endpunkten ($X_1$, $X_2$, $X_3$, $Y_1$, $Y_2$, $Y_3$) der Laserlinie ($b_1$, $b_2$, $b_3$) sich innerhalb eines voreingestellten Bereichs befindet, als die Spule zu erkennen,

wobei die Messeinheit (130) dazu konfiguriert ist, Radien des inneren Kreises und des äußeren Kreises der Spule zu berechnen, wobei der Unterschied zwischen diesen Werten die genaue Länge des Teleskops in der tatsächlichen Spule angibt, das heißt, die Dicke der Spule, und den gemessenen Wert der Laserlinie ($b_1$, $b_2$, $b_3$), der von der tatsächlichen Kamera erhalten wurde, auf die berechnete Länge zu korrigieren.

2. Vorrichtung (100) nach Anspruch 1, wobei die Kameraeinheit (120) eine Vielzahl von Kameras (121, 122) umfasst.

3. Vorrichtung (100) nach Anspruch 1, wobei die Messeinheit (130) dazu konfiguriert ist, den Grad der Teleskopierung der Spule gemäß einem Durchschnittswert der Längen zwischen den beiden Endpunkten ($X_1$, $X_2$, $X_3$, $Y_1$, $Y_2$, $Y_3$) der Laserlinie (b1, b2, b3) aus der mindestens einen Laserlinie (b1, b2, b3) oder einer Länge zwischen beiden Endpunkten ($X_1$, $X_2$, $X_3$, $Y_1$, $Y_2$, $Y_3$) einer Laserlinie (b1, b2, b3), die eine hohe Lichtintensität in einem Bild der Laserlinie (b1, b2, b3) aufweist, zu messen.

**4.** Vorrichtung (100) nach Anspruch 1, ferner umfassend eine Transfereinheit (140), die die Spule an eine bestimmte Position transferiert.

**Revendications**

**1.** Appareil (100) configuré pour mesurer le télescopage d'une bobine, comprenant :

une unité de génération laser (110) configurée pour générer au moins une ligne laser émise vers une surface latérale de la bobine et passant par un centre de la bobine ;
une unité de caméra (120) configurée pour capturer une image de la surface latérale de la bobine, incluant l'au moins une ligne laser ; et
une unité de mesure (130) configurée pour mesurer un degré de télescopage de la bobine sur une longueur correspondant à la surface latérale de la bobine, parmi des longueurs de l'au moins une ligne laser, à partir de l'image capturée par l'unité de caméra (120) ;
dans lequel l'unité de génération laser (110) comprend un générateur laser de première ligne (111), un générateur laser de deuxième ligne (112) et un générateur laser de troisième ligne (113), configurés pour émettre respectivement des lignes laser (b1, b2, b3) vers la surface latérale de la bobine à intervalles égaux ;
dans lequel l'unité de mesure (130) est configurée pour reconnaître les deux points d'extrémité ($X_1$, $X_2$, $X_3$, $Y_1$, $Y_2$, $Y_3$) de la ligne laser ($b_1$, $b_2$, $b_3$) chevauchant un cercle interne et un cercle externe de la bobine, parmi les lignes laser ($b_1$, $b_2$, $b_3$), à partir de l'image capturée par l'unité de caméra (120), et pour reconnaître un cas dans lequel une longueur entre les deux points d'extrémité ($X_1$, $X_2$, $X_3$, $Y_1$, $Y_2$, $Y_3$) de la ligne laser ($b_1$, $b_2$, $b_3$) est dans une plage prédéfinie, comme étant la bobine ;
dans lequel l'unité de mesure (130) est configurée pour calculer des rayons du cercle interne et du cercle externe de la bobine, dans lequel la différence entre ces valeurs indique la longueur exacte du télescopage dans la bobine réelle, c'est-à-dire l'épaisseur de la bobine, et pour corriger la valeur mesurée de la ligne laser ($b_1$, $b_2$, $b_3$) obtenue par la caméra réelle à la longueur calculée.

**2.** Appareil (100) selon la revendication 1, dans lequel l'unité de caméra (120) comprend une pluralité de caméras (121, 122).

**3.** Appareil (100) selon la revendication 1, dans lequel l'unité de mesure (130) est configurée pour mesurer le degré de télescopage de la bobine selon une valeur moyenne des longueurs entre les deux points d'extrémité ($X_1$, $X_2$, $X_3$, $Y_1$, $Y_2$, $Y_3$) de la ligne laser ($b_1$, $b_2$, $b_3$), parmi l'au moins une ligne laser ($b_1$, $b_2$, $b_3$), ou une longueur entre les deux points d'extrémité ($X_1$, $X_2$, $X_3$, $Y_1$, $Y_2$, $Y_3$) d'une ligne laser ($b_1$, $b_2$, $b_3$) ayant une intensité lumineuse élevée dans une image de la ligne laser ($b_1$, $b_2$, $b_3$).

**4.** Appareil (100) selon la revendication 1, comprenant en outre une unité de transfert (140) transférant la bobine à une certaine position.

【FIG. 1】

【FIG. 2】

【FIG. 3】

【FIG. 4】

**EP 3 845 856 B1**

**REFERENCES CITED IN THE DESCRIPTION**

**Patent documents cited in the description**

- KR 101715497 B1
- KR 1020040020358 A
- JP 2014069216 A
- JP 2003097923 A
- KR 101581554 B1